# EUROPEAN PATENT APPLICATION

(11) **EP 4 606 446 A1**
(43) Date of publication of application: **27.08.2025**
(21) Application number: 25154971.3
(22) Date of filing: 30.01.2025
(51) Int. Cl.: A63F 13/355, A63F 13/358, A63F 13/52, G02B 27/00, G06F 3/13, G06T 15/00

(54) **METHOD OF IMAGE ADJUSTMENT AND APPARATUS**

(30) Priority: 22.02.2024 GB 202402505
(71) Applicant: Sony Interactive Entertainment Inc., Tokyo 108-0075 (JP)
(72) Inventor: LEUNG, Jun Yen, London, W1F 7LP (GB); CONNOR, Patrick, London, W1F 7LP (GB); MONTI, Maria, London, W1F 7LP (GB); GREEN, Lawrence, London, W1F 7LP (GB); CERRATO, Maurizio, London, W1F 7LP (GB); GUPTA, Rajeev, London, W1F 7LP (GB)
(74) Representative: D Young & Co LLP

(57) **Abstract**

A method of image adjustment for an image sequence, comprises the steps of generating a first estimate, of the gaze positions of multiple viewers of an image, modifying a distribution of image quality for an image, responsive to the first estimate, and providing the image to the multiple viewers, generating a second estimate, of the effect of modifying the distribution of image quality on the gaze positions of at least a subset of viewers, and modifying the distribution of image quality for a subsequent image, responsive to the second estimate.

## Description

The present invention relates to a method of image adjustment and an apparatus for the same.

Conventional techniques for improving the image quality delivered to a single user can be based upon an assumed focus of attention (for example the centre of the image, or a face within the image; i.e. either a position or content based assumption), or can be based upon a detected focus of attention, for example using gaze tracking to estimate where the user's eye line intersects with the image.

In either case, the image quality may be improved by distributing computing and/or bandwidth resources to favour the image area comprising the focus of attention. This may take the form for example of foveated rendering, where the resolution is highest at the focus of attention, and lower in peripheral regions - thereby reducing the overall rendering cost of an image and thereby typically enabling greater detail at the focus of attention and/or higher frame rates than if the whole image was rendered at the highest/full resolution.

Similarly, it may take the form of differential streaming, with the image area comprising the focus of attention being subject to less compression than peripheral regions; either within a single stream, or by also streaming enhancement layers for the focal image area.

However, the situation becomes more complex when multiple users are looking at an image; typically one may add their respective focuses of attention together to create a heat map of attention, and then apply some or all of the above techniques using the heat map area instead of a single focal area (optionally with a suitable cut-off threshold for the heat map values to limit the overall size of heat map area subject to these techniques).

However, this is a relatively crude approach and can leave some viewers frustrated if their interests are not in the majority.

Accordingly, embodiments of the present description seek to address or mitigate this problem.

### SUMMARY OF THE INVENTION

Various aspects and features of the present invention are defined in the appended claims and within the text of the accompanying description.
- In a first aspect, a method of image adjustment for an image sequence is provided in accordance with claim 1.
- In another aspect, an image adjustment system is provided in accordance with claim 13.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an image adjustment system in accordance with embodiments of the present description.
- Figures 2A - 2E are schematic diagrams of various configurations of an image adjustment system in accordance with embodiments of the present description.
- Figure 3 is a schematic diagram of a gaze estimation technique in accordance with embodiments of the present description.
- Figures 4A-4C are schematic diagrams of a gaze estimation technique for multiple viewers in accordance with embodiments of the present description.
- Figure 5 is a flow diagram of a method of image adjustment for an image sequence, in accordance with embodiments of the present description.

### DESCRIPTION OF THE EMBODIMENTS

An apparatus and method of image adjustment are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

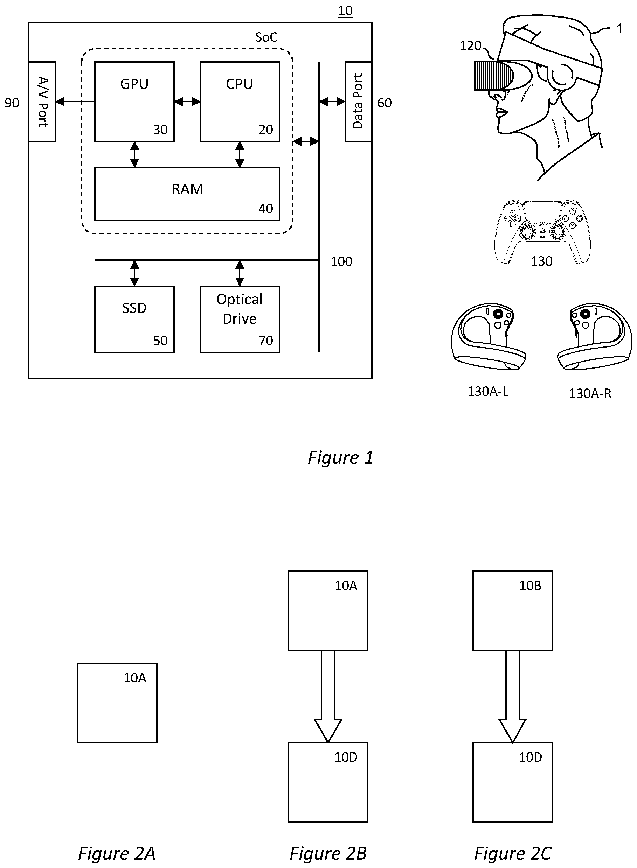

Referring now to the drawings, wherein like reference numerals designate identical or corresponding parts throughout the several views, Figure 1 shows an example of an entertainment system 10 such as a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

Referring now to Figures 2A-E, the entertainment device 10 is an example of an apparatus for tracking multiple points of attention, typically for the purposes of modifying the rendering/production of images. The entertainment device may also be an example of an apparatus for tracking multiple points of attention, for the purposes of encoding or decoding images in a stream. In this latter case however typically the device may be a physical or virtual component of a server providing a streaming content service.

In any event, the entertainment device may implement one or both of image generation and image streaming (transmission or reception) based upon tracking multiple points of attention as described elsewhere herein. Alternatively, two devices may separately implement image generation and then image streaming (for example, an entertainment device may perform rendering based on multiple points of attention, and then a separate streaming encoder may implement variable encoding within an image based on the multiple points of attention). Similarly, for pre-recorded content (or more generally image content that itself does not change as a function of attention) the streaming encoder may implement variable encoding within an image based on multiple points of attention.

Hence in figure 2A a client entertainment device 10A may implement image generation based upon tracking multiple points of attention, for example of direct viewers of a television coupled to the entertainment device.

Meanwhile in figure 2B a similar entertainment device 10 A acting remotely may stream such generated images to one or more receiving devices 10D (which may be any suitable receiving device such as a computer, videogame console, smart phone, smart TV, or tablet).

In figure 2C, a streaming encoder 10B implements variable encoding within images (for example pre-recorded images or images generated without reference to multiple points of attention) and streams to the or each receiving device 10D.

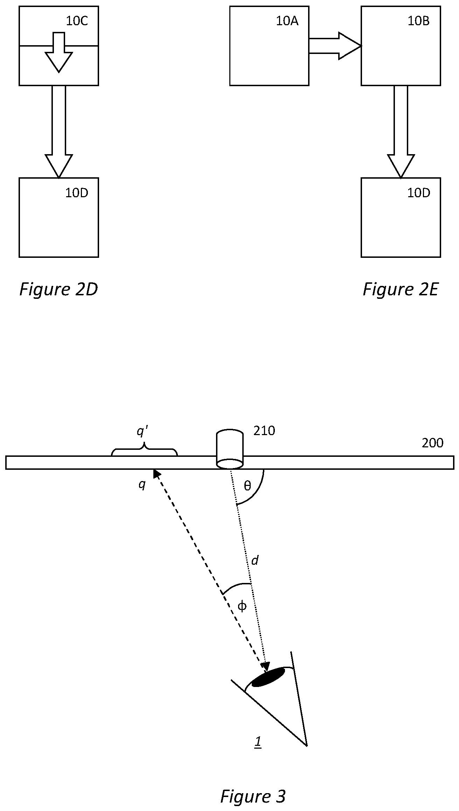

Meanwhile in figure 2D a client entertainment device 10C combines both functions, generating images and then variably encoding them in response to tracking multiple points of attention.

Finally in figure 2E, entertainment device 10A generates the images, and passes them to streaming encoder 10B for variable encoding, with the stream being decoded by one or more receiving devices 10D. In the examples of Figures 2D and 2E, optionally only one of the generating and streaming steps is in response to tracking multiple points of attention.

Other combinations will be apparent to the skilled person, for example to accommodate the case of peer-to-peer streaming or distribution.

Referring now to figure 3, an individual user's attention may be determined for example using a camera 210 that has a known physical relationship to the display of the image; for example, the camera may be integrated into the bezel or frame of a TV 200 (shown in figure 3 from the top edge). The distance d and direction θ from the camera to the user's eye, together with the relative direction ϕ of the eye itself, can be used to determine where on the screen the user is looking (marked as position q in Figure 3) and hence at what part of the displayed image. The distance d can be estimated in a variety of ways, such as by using a stereo camera and estimating distance as a function of image disparity between left and right images, or other distance measuring schemes such as infrared or ultrasound distance measurements known in the art.

As a specific example of a camera that has a known physical relationship with the display of the image, the attention of an HMD user may be determined by a gaze tracking camera within the HMD. In this case the distance to the eye may be assumed rather than measured directly, and / or may be based on / adjusted by the size of the eye or a feature thereof such as the iris within the captured images.

Multiple users' attention can be determined in a similar manner. Where multiple people are all viewing the same display, then camera 210, or plural such cameras, can capture images of the eyes of multiple users to determine where each user is looking on the screen (if at all).

Where multiple people are all viewing the same content, but potentially on different screens (for example in the case of streamed content, this may be viewed by multiple users of one screen, respective users of separate screens, or a combination of these), respective cameras for respective screens can capture images of the eyes of the or each user of that screen to determine where each user is looking on that screen, if at all; the results can then be transmitted back to the streaming source which can aggregate the results to treat them as if all the users were viewing the same image.

In any event, the result is a plurality of indicators q of what parts of the displayed image are being viewed by respective users. Typically, these indicators are used to indicate an effective area *q*'that would benefit from being of high quality for that respective user. This area q' may be thought of as the foveal area for that user.

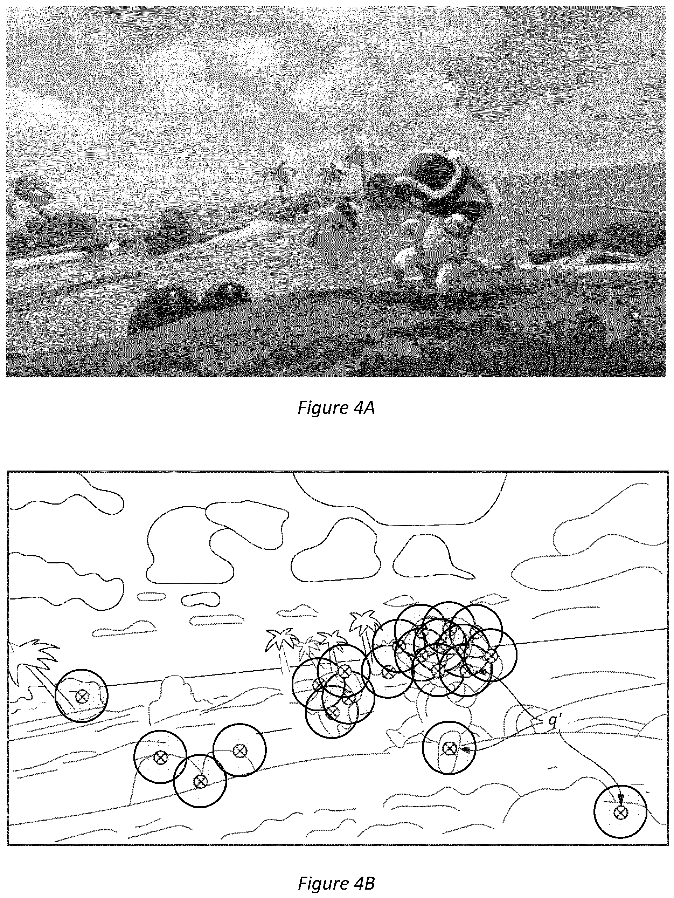

As a non-limiting example, referring now to Figure 4A this shows an image of two robot characters celebrating as two other robots look on; meanwhile in the background there is an island.

Figure 4B shows an aggregated set of gaze positons *q* (denoted by the ⊗ symbol) and the corresponding assumed foveal areas *q*' (denoted by the shaded circles). The respective size of these areas may be assumed the same (as shown), or may be calculated as a function of user distance from the image (as the fovea region will subtend a larger portion of the image with distance).

In this example case the areas *q*' are relatively small and there are a comparatively large number of users represented. Optionally the size of area q' can be chosen to result in a predetermined portion of the image being encompassed by the combined q' areas, the predetermined portion itself being chosen to enable high quality rendering and/or encoding within a specific computing and/or bandwidth budget. Hence for example in a scenario with three people looking at a single TV, the *q*' areas might be made larger; this has the advantage that any small errors in the gaze estimation are likely to be unnoticed if the user is still looking in a larger high quality area.

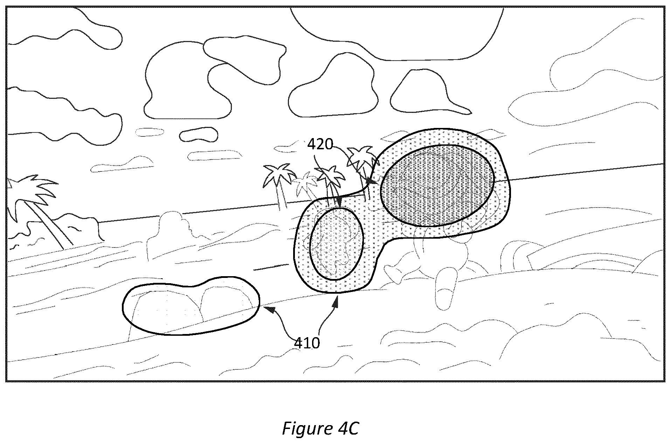

Turning now to Figure 4C, optionally the overlapping *q*' areas may in effect be combined to form a cumulative attention heatmap 410. The heatmap need not be contiguous, and optionally may have several threshold levels indicating the relative levels of attention (here inner zones 420 indicate comparatively higher levels of attention). Meanwhile optionally isolated areas, or areas that do not meet a predetermined attention threshold, may not be represented by the heat map at all. Hence in this case the area that was directed to the island and the area directed to a relatively arbitrary bottom-right corner of the image do not reach a first threshold for inclusion in the heatmap. It will be appreciated that such a heatmap may also be generated from the relative density of q positions within the image.

The threshold for inclusion in the heatmap, and for any internal levels thereof, may again be set as a function of computational and/or bandwidth budget for the eventual generated and/or encoded image. Hence for a larger budget, the threshold(s) may be lower thereby resulting in more image area being included, and for a smaller budget the threshold(s) may be higher. Where the heat map has multiple thresholds / levels 410/420, these can be used to select multiple levels of quality for generation and/or encoding.

Subsequently, an image is generated and/or encoded with the highest quality within the heatmap region (or the highest heatmap region), and with progressively lower quality for lower regions of the heatmap and then for regions outside the heatmap, optionally as a function of distance from the heatmap region(s). Hence in the example of Figure 4C, the highest quality generation and/or encoding would be for regions 420. Then a less high quality would be used for regions 410, and finally a still less high quality for the remainder of the image, possibly with a continuous or step-wise reduction in quality as a function of distance from the regions 420 and/or 410.

The current gaze information may be used to inform the generation and/or streaming of the current image, or may be used for the next image in a generated / streamed sequence (or whichever image is amenable to modification once the information is received, optionally up to a maximum lag after which the information may be considered too out of date to generate accurate data/heatmaps).

Notably, in embodiments of the present description it is appreciated that this differential quality within the provided images is not a one-way process; changing the quality within the images may influence how the users interact with the images, typically in subsequent images as they react to both the ongoing content and the quality with which it is presented.

Hence in embodiments of the present description, the adaptation of image quality is an iterative or two-way process, based on how previous adaptations affect user gaze, and not merely on current gaze patterns.

Hence for example there may be a tendency for users looking within region 410 to converge within region 420, as they were generally looking at the same object but now a sub-region 420 associated with this object may be noticeably clearer to them, due to its proximity to where they were already looking (whether that distinction is made consciously or unconsciously). Meanwhile users looking at regions that fall outside the heatmap thresholds may find their experience less satisfactory if the image quality drops, and either be prompted to look around the images for higher quality content, or measurably disengage (e.g. stop looking at the image entirely) or passively disengage (continue to look at the same low-quality, low-interest area because in fact they are disengaged and thinking about something else).

These scenarios, based on how previous adaptations affect user gaze, may each warrant a response that modifies how the images are generated/encoded, to encourage improved attention / engagement with the content.

To detect how the users are behaving, one may track individual q or q' positions, as discussed later herein.

Alternatively or in addition, several image-wide measures may be considered. Firstly, the measure Σ ∪q' (the union area of plural q' areas occupying the image), and secondly, the measure Σ q' (the aggregate sum of plural q' areas within the image).

It will be appreciated that Σ q' > Σ ∪q' in all cases except where there is no overlap between any q' areas; in the case of no overlap, Σ q' = Σ ∪q'.

From these two measures, one can infer the following:
- If Σ q' decreases, people are measureably disengaging from the content (i.e. looking away).
- If Σ q' / Σ uq' increases, it means that people's attention is converging into a smaller total area or areas. Similarly if it decreases it generally means that people's attention is diverging across the image.
- If Σ q' / Σ ∪q' is steadily below a predetermined threshold (e.g. over/for a total of N frames), it suggests that there is persistent minority of users interested in something other than the focus of the majority, or are passively disengaged.

The union area Σ ∪q' may already be computed for determining the area that will be higher quality, and/or for evaluating the impact on a computational / bandwidth budget. Meanwhile Σ q' is straightforward as q' (or respective q's) is known, as is the number of viewers. As such this is a computationally cheap means of evaluating user behaviour in response to variable intra-image quality viewing.

If Σ q' decreases, it may suggest that users are unsatisfied with the resultant viewing experience and are no longer watching, or at least looking away. In this case, if Σ ∪q' does not decrease, or does not decrease by a similar amount, then this suggests that people within the high quality area are not satisfied. Meanwhile if Σ ∪q' does decrease, is suggests that people outside the high quality area are unsatisfied.

If people in the high quality area are not satisfied, then of course this could be due to the content of the images, which is outside the remit of the embodiment. However, it could be because the quality is not sufficiently high. In this case, the system may further reduce the quality in image regions outside the heatmap threshold 410 in order to allocate more resource to the image quality within the heatmap threshold.

If the quality is already at a maximum within the heatmap threshold, then in principle the threshold can be lowered to expand the high quality area until just prior to requiring a drop in quality for the available computational/bandwidth budget.

If people looking in the low quality area are not satisfied, again this could be due to the content of the images, which is outside the remit of the embodiment. However, again it could be because the quality is not sufficiently high, but this time in the outer region. Hence in this case, the system may increase the quality in image regions outside the heatmap threshold 410. This may be done up to a maximum amount that depends on an acceptable corresponding loss of quality within the heatmap threshold, and any available bandwidth cap.

In order to do this efficiently, optionally at this point the location of individual q' areas or clusters thereof outside the heatmap threshold, or optionally further still just q' areas that appear to have now left, can be candidates for increasing quality, rather than increasing it for the entire outer area; this limits the impact on the quality within the heatmap threshold area.

Clearly, these two approaches are in tension, as mitigation of one may exacerbate the other and vice-versa. Hence as a result the system should converge on a dynamic equilibrium that finds the best trade-off of quality within and outside the heat map threshold that results in the highest Σ q' and hence highest overall user engagement with the images.

As noted previously, optionally one may track individual q or q' positions to detect how users are behaving. One may track all the positions, or a subset of positions, the subset being selected according to one or more criteria.

One subset may be for those users whose q position strays out of the heatmap threshold region 420 and/or 410 into a lower viewed area; as noted above, these users may be dissatisfied with the high quality content. If they then stop viewing altogether (look away or optionally to the peripheral of the image) it may be assumed that it was the content or external factors that caused them to change view, and so the quality within the heat map may not be altered.

Another may be for those users who remain outside the heatmap; if a threshold number are converging toward an area of the image, it may be useful to improve the quality of that area in anticipation of their arrival; this may occur for example when a new character walks into view.

Similarly, some users may regularly move between the area of the heat map and another area of the screen and back; this may indicate a wish to access additional information such as the time, or subtitles / credits that are only briefly visible and only accessed (but are of potential importance) to a minority of users.

Hence for example if changing the quality of the image results in a subset of users spending more time in the subtitles area of the image (e.g. in the case where the subtitles are not locally generated, e.g. when streaming), then the system may infer that the change in image quality is adversely impacting a persistent minority of users, and reallocate bandwidth to the subtitles area. On other occasions, there may be non or only very view people accessing subtitles, or there may be no dialogue, and so the system will typically note the convergence onto the high quality areas again. Optionally, some users may be identified as users with a special status or weighting (for example being identified as deaf in their user profile), and so their behaviour and q' areas may be given greater weight.

Conversely, the approach of modifying image quality in response to tracking a plurality of viewpoints can result in a feedback loop; once there are sufficient users' q or q's to reach a first heatmap threshold at which image quality is differentiated within the threshold area from outside it, this can encourage other users to migrate toward the same area, as it looks better. Where the technique provides multiple levels of quality (as per Figure 4C), this migration can continue to coalesce until people are looking at a high quality area that is a high quality area because people are looking at it, rather than necessarily because it is the best part of the image to be looking at, for example to obtain information or to follow an intended narrative. Furthermore, the high quality area can become small because people tend to converge on the central point. The notional extreme of this would be that all q positions perfectly overlap as everyone looks at the same high quality q' area.

Typically, the content being shown serves to mitigate this - people will track a moving face on screen and so the region that becomes high quality will indirectly track the area(s) of interest within the content, which tend to be dynamic; however there is scope for the area of high quality to become an area of interest in its own right, or to go out of sync with the area(s) of interest in the content.

Accordingly, the system can estimate when the high quality area of the image is biasing people toward itself rather than reflecting what people want to see, using one or more techniques described below.

Where a high quality area (e.g. area 420) corresponds with an object in the image, then it is reasonable to assume that the high quality area would track the object if it (or the camera viewpoint) moves; consequently if there is a lag between movement of the assumed target object and the high quality area, it is because people are torn between tracking the object and looking at the better quality elements of the objects still in the high quality area. Accordingly, the system can identify the underlying object and move the high quality area with it, or (as the case may be) stretch the high quality area to accommodate those who follow the object and those who lag. If users start to look elsewhere (for example because the images were tracking a conversation, and the first object (for person) is no longer the focus of interest), then tracking of the underlying object can stop.

As noted earlier, when Σ q' /Σ ∪q' increases, it means that people's attention is converging into a smaller total area or areas; optionally once the ratio reaches a threshold value (as a non-limiting example a value of 0.9, suggesting 90% of people are looking at the same thing), then the graphical quality in the high quality area(s) could be gradually lowered until the ratio starts to drop (or drops to, for example 0.8), so that the graphical quality per se no longer appears to be a cause for the user convergence; rather, the graphical quality is better in that area, but is good enough that some people are content to look elsewhere anyway.

It will be appreciated that different content may have different 'ideal' Σ q' / Σ ∪q' ratios; for example soccer, with many individuals players, and typically multiple relevant parties at any given moment (e.g. a passer, ball, receiver, and tackler), may have a low ratio indicative of a wide dispersal, but in effect have three, four or five transitory areas of high quality corresponding to currently relevant parties. Such patterns of attention may be modelled and the strategies herein adjusted accordingly.

To this end, optionally a machine learning system may be used to model the quality adjustment, based on q' values, and information indicative of the input content (whether images or reduced scale representations thereof, and or other content descriptors, including e.g. current audio balance), and trained on outputs indicative of intended areas of increased quality (whether indicated as areas, e.g. coordinates, shape primitives, macro blocks or similar, or a mask at full or reduced scale), the machine learning system optionally also receiving information about the type of content (e.g. football vs. news interviews) or alternatively being trained on a specific type of content and subsequently selected and used for that content.

In summary, the system reviews how the change in quality across the image, driven by viewer gazes, is affecting the viewers' subsequent gazes, and updating the quality to avoid adverse effects and/or promote desired effects, optionally in a manner specific to the type of content being shown.

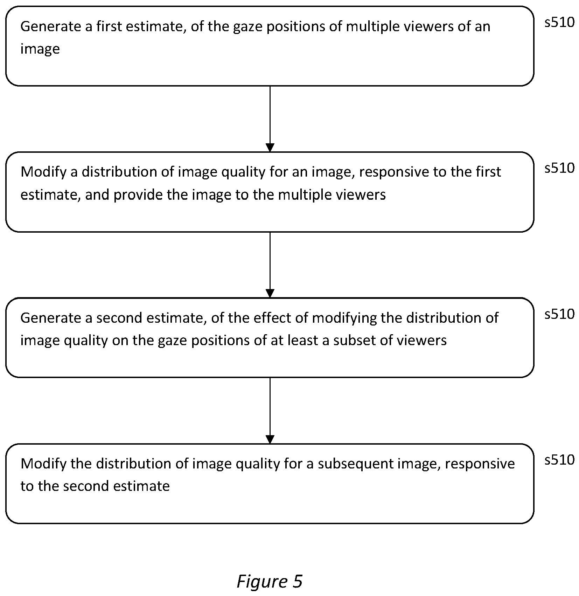

Turning now to Figure 5, in a summary embodiment of the present description, a method of image adjustment for an image sequence comprises the following steps.

In a first step s510, generating a first estimate, of the gaze positions of multiple viewers of an image, as described elsewhere herein.

In a second step s520, modifying a distribution of image quality for an image, responsive to the first estimate, and providing the image to the multiple viewers, as described elsewhere herein. As noted with reference to Figures 2A-E the providing may be direct (e.g. from a console to a TV) or streamed.

In a third step s530, generating a second estimate, of the effect of modifying the distribution of image quality on the gaze positions of at least a subset of viewers, as described elsewhere herein. As noted elsewhere herein, this enables the two-way, iterative assessment of the gaze-based quality distribution on subsequent gaze behaviour.

Finally in a fourth step s540, modifying the distribution of image quality for a subsequent image, responsive to the second estimate, as described elsewhere herein. As noted elsewhere herein, this enables a modification of the gaze-based quality distribution based on how it is subsequently affecting viewer gaze behaviour, e.g. to mitigate over-convergence, or to dynamically balance the interests of different viewers.

It will be apparent to a person skilled in the art that variations in the above method corresponding to operation of the various embodiments of the apparatus as described and claimed herein are considered within the scope of the present invention, including but not limited to that:
- the step of modifying a distribution of image quality comprises modifying the distribution of image quality responsive to one or more metrics selected from the list consisting of a relative density of gaze positions, and a degree of overlap of regions corresponding to gaze positions, of multiple viewers of the image, as described elsewhere herein;
   - in this case, optionally the distribution of image quality is in one or more discrete steps, responsive to one or more corresponding predetermined thresholds of the or each metric, as described elsewhere herein;
      - in this case, optionally the one or more predetermined thresholds are set responsive to a predetermined budget for the provision of the modified image, as described elsewhere herein;
- the step of generating a second estimate of the effect of modifying the distribution of image quality on the gaze positions of at least a subset of viewers comprises the steps of generating a third estimate, of the gaze positions of multiple viewers of the subsequent image; evaluating a change of the gaze positions responsive to the distribution of image quality in the image presented to the viewers; and generating the second estimate responsive to the evaluation of the change, as described elsewhere herein;
- if the convergence of the gaze positions of multiple viewers of an image exceeds a first predetermined threshold (e.g. when Σ q' / Σ ∪q' increases to exceed such a threshold), the method further comprises the step of modifying the distribution of image quality for a subsequent image, to reduce the quality of the image in the area of convergence, as described elsewhere herein;
- if the convergence of the gaze positions of multiple viewers of an image is below a second predetermined threshold, optionally for a predetermined period, the method further comprises the step of modifying the distribution of image quality for a subsequent image, to increase the quality of the image in multiple areas, responsive to the gaze positions, as described elsewhere herein;
- if modifying the distribution of image quality for a subsequent image reduces the image quality in an area of an image, or for an object in an image, that is being viewed by a threshold number of viewers for a threshold period of time, and the second estimate indicates a reduction in the number of viewers in that area, then the method further comprises the step of modifying the distribution of image quality for a subsequent image, to increase the quality of the image in that area, as described elsewhere herein;
- in this case, optionally the step of modifying the distribution of image quality for a subsequent image, to increase the quality of the image in that area comprises estimating whether viewers previously in that area are moving to or have moved to a higher quality area, and if so not modifying the distribution of image quality in that area, as described elsewhere herein;
- the method comprises the steps of: based on successive estimates of the gaze positions of multiple viewers of successive images, estimating an area of future convergence of at least a subset of viewers, and modifying the distribution of image quality for a subsequent image, to increase the quality of the image in that area of future convergence, as described elsewhere herein;
- the method comprises the steps of: based on successive estimates of the gaze positions of multiple viewers of successive images, estimating a pair of areas that at least a subset of viewers switch between over time, and modifying the distribution of image quality for a subsequent image, to increase the quality of the image in both areas, as described elsewhere herein;
- the step of modifying the distribution of image quality for a subsequent image comprises one or more selected from the list consisting of modifying the distribution of image quality during generation of the subsequent image, and modifying the distribution of image quality when streaming the subsequent image, as described elsewhere herein.

It will be appreciated that the above methods may be carried out on hardware suitably adapted as applicable by software instruction or by the inclusion or substitution of dedicated hardware.

Thus the required adaptation to existing parts of a equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in another summary embodiment of the description, and referring back to Figures 1 and 2A-E, an image adjustment system (e.g. entertainment device 10A, and/or streaming/distribution encoder 10B, or combined device 10C) for use with an image sequence comprises the following.

A gaze estimation processor (for example CPU 20) configured (for example under suitable software instruction) to generate a first estimate, of the gaze positions of multiple viewers of an image, as described elsewhere herein.

An image processor (for example GPU 20) configured (for example under suitable software instruction) to modify a distribution of image quality for an image, responsive to the first estimate, and provide the image to the multiple viewers, as described elsewhere herein.

An effect estimation processor (for example CPU 20) configured (for example under suitable software instruction) to generate a second estimate, of the effect of modifying the distribution of image quality on the gaze positions of at least a subset of viewers, as described elsewhere herein.

With the image processor configured (again for example under suitable software instruction) to modify the distribution of image quality for a subsequent image, responsive to the second estimate, as described elsewhere herein.

Instances of this summary embodiment implementing the methods and techniques described herein (for example by use of suitable software instruction) are envisaged within the scope of the application, including but not limited to that:
- the effect estimation processor is configured, when generating the second estimate, to receive from the gaze estimation processor a third estimate, of the gaze positions of multiple viewers of the subsequent image; evaluate a change of the gaze positions responsive to the distribution of image quality in the image presented to the viewers; and generate the second estimate responsive to the evaluation of the change, as described elsewhere herein; and
- the image processor is configured to modify a distribution of image quality for a subsequent image by one or more selected from the list consisting of modifying the distribution of image quality during generation of the subsequent image, and modifying the distribution of image quality when streaming the subsequent image (for example depending on the device role as entertainment device 10A, and/or streaming/distribution encoder 10B, or combined device 10C), as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of image adjustment for an image sequence, comprising the steps of:
generating a first estimate, of the gaze positions of multiple viewers of an image;
modifying a distribution of image quality for an image, responsive to the first estimate, and providing the image to the multiple viewers;
generating a second estimate, of the effect of modifying the distribution of image quality on the gaze positions of at least a subset of viewers; and
modifying the distribution of image quality for a subsequent image, responsive to the second estimate.

2. A method according to claim 1, in which the step of modifying a distribution of image quality comprises:
modifying the distribution of image quality responsive to one or more metrics selected from the list consisting of:
i. a relative density of gaze positions; and
ii. a degree of overlap of regions corresponding to gaze positions,
of multiple viewers of the image.

3. A method according to claim 2, in which the distribution of image quality is in one or more discrete steps, responsive to one or more corresponding predetermined thresholds of the or each metric.

4. A method according to any preceding claim, in which the step of generating a second estimate of the effect of modifying the distribution of image quality on the gaze positions of at least a subset of viewers comprises the steps of:
generating a third estimate, of the gaze positions of multiple viewers of the subsequent image;
evaluating a change of the gaze positions responsive to the distribution of image quality in the image presented to the viewers; and
generating the second estimate responsive to the evaluation of the change.

5. A method according to any preceding claim, wherein
if the convergence of the gaze positions of multiple viewers of an image exceeds a first predetermined threshold, the method further comprises the step of:
modifying the distribution of image quality for a subsequent image, to reduce the quality of the image in the area of convergence.

6. A method according to any preceding claim, wherein
if the convergence of the gaze positions of multiple viewers of an image is below a second predetermined threshold for a predetermined period, the method further comprises the step of:
modifying the distribution of image quality for a subsequent image, to increase the quality of the image in multiple areas, responsive to the gaze positions.

7. A method according to any preceding claim, wherein
if modifying the distribution of image quality for a subsequent image reduces the image quality in an area of an image, or for an object in an image, that is being viewed by a threshold number of viewers for a threshold period of time; and
the second estimate indicates a reduction in the number of viewers in that area, then the method further comprises the step of:
modifying the distribution of image quality for a subsequent image, to increase the quality of the image in that area.

8. A method according to claim 7 in the step of modifying the distribution of image quality for a subsequent image, to increase the quality of the image in that area comprises:
estimating whether viewers previously in that area are moving to or have moved to a higher quality area, and if so
not modifying the distribution of image quality in that area.

9. A method according to any preceding claim, comprising the steps of:
based on successive estimates of the gaze positions of multiple viewers of successive images;
estimating an area of future convergence of at least a subset of viewers; and
modifying the distribution of image quality for a subsequent image, to increase the quality of the image in that area of future convergence.

10. A method according to any preceding claim, comprising the steps of:
based on successive estimates of the gaze positions of multiple viewers of successive images;
estimating a pair of areas that at least a subset of viewers switch between over time; and
modifying the distribution of image quality for a subsequent image, to increase the quality of the image in both areas.

11. A method according to any preceding claim, in which the step of modifying the distribution of image quality for a subsequent image comprises one or more selected from the list consisting of:
i. modifying the distribution of image quality during generation of the subsequent image; and
ii. modifying the distribution of image quality when streaming the subsequent image.

12. A computer program comprising computer executable instructions adapted to cause a computer system to perform the method of any one of the preceding claims.

13. An image adjustment system for use with an image sequence, comprising:
a gaze estimation processor configured to generate a first estimate, of the gaze positions of multiple viewers of an image;
an image processor configured to modify a distribution of image quality for an image, responsive to the first estimate, and provide the image to the multiple viewers;
an effect estimation processor configured to generate a second estimate, of the effect of modifying the distribution of image quality on the gaze positions of at least a subset of viewers; and
the image processor configured to modify the distribution of image quality for a subsequent image, responsive to the second estimate.

14. An image adjustment system according to claim 12, in which
the effect estimation processor is configured, when generating the second estimate, to
receive from the gaze estimation processor a third estimate, of the gaze positions of multiple viewers of the subsequent image;
evaluate a change of the gaze positions responsive to the distribution of image quality in the image presented to the viewers; and
generate the second estimate responsive to the evaluation of the change.

15. An image adjustment system according to claim 13 or claim 14, in which the image processor is configured to modify a distribution of image quality for a subsequent image by one or more selected from the list consisting of:
i. modifying the distribution of image quality during generation of the subsequent image; and
ii. modifying the distribution of image quality when streaming the subsequent image.
